# EUROPEAN PATENT SPECIFICATION

(11) **EP 1 517 765 B1**
(45) Date of publication and mention of the grant of the patent: **23.12.2009**
(21) Application number: 03733971.0
(22) Date of filing: 06.05.2003
(51) Int. Cl.: B23K 26/38

(54) **MANUFACTURE OF VALVE STEMS**
HERSTELLUNG VON VENTILSCHÄFTEN
FABRICATION DE TIGES DE SOUPAPES

(30) Priority: 28.06.2002 GB 0214990
(43) Date of publication of application: 30.03.2005
(73) Proprietor: 3M Innovative Properties Company, St. Paul MN 55133-3427 (US)
(72) Inventor: LOW, David, K., Y., 670277 Singapore (SG); LI, Lin, Stockport SK7 3BU (GB); BRADLEY, Lisa, Bury, Lancashire B19 7LD (GB)
(74) Representative: Aleandri-Hachgenei, Lorraine E.
(86) International application number: PCT/US2003/014468
(87) International publication number: WO 2004/002672

(56) References cited:
- WO-A-00/69594
- WO-A-89/03274
- WO-A-99/55600
- DE-A- 3 937 460

## Description

### Technical Field

The present invention relates generally to improvements in the manufacture of valve components, in particular valve stems for pharmaceutical aerosol valves, in particular for metered dose dispensing valves. The present invention also relates to the provision of valve stems having desirable structural qualities and/or blockage resistance.

### Background of the Invention

The use of aerosols to administer medicament has been known for several decades. Such aerosol formulations generally comprise medicament, one or more propellants, (e.g. chlorofluorocarbons and more recently hydrogen-containing fluorocarbons, such as propellant 134a (CF₃CH₂F) and propellant 227 (CF₃CHFCF₃)) and surfactant and/or a solvent, such as ethanol.

Pharmaceutical aerosols for inhalation, nasal, sublingual administration, generally comprise a container or vial of the aerosol formulation equipped with a metered dose dispensing valve. Although there are many different designs of metered dose valves, the majority comprises a metering chamber and a valve stem that slides through a diaphragm, also known as an outer stem gasket or seal, into the metering chamber. When the valve is in its non-dispensing position, the diaphragm maintains a closed seal around the valve stem. The valve stem includes a side port in communication within a passageway inside the valve stem. When the valve is actuated, the side port slides past the diaphragm and into the metering chamber, and the contents of the metering chamber pass through the side port and passageway, exiting the stem outlet.

The diameter of the side port can range from 0.1 to 0.8 mm, while the stem outlet diameter typically ranges from 0.8 to 3 mm. The central passageway typically has a diameter from 0.8 to 4 mm.

It will be appreciated that the aerosol valve as well as the aerosol formulation, each play an important part in obtaining optimum pharmaceutical properties from the product. For example, there should be no blockage of the valve, in particular the valve stem, which could impair or prevent medicament delivery.

Valve stems have conventionally been constructed by injection molding thermoplastics and by deep drawing metal. Metal valve stems may also be fabricated by machining and/or cold forging.

Deep drawn metal valve stems are hollow having a central bore from the closed end of the valve stem to the outlet end of stem, which acts the passageway. Typically the outlet end is curved inwardly restricting the size of the central bore at the outlet. The side port is generally formed by punching. This operation results in a circumferential projection or burr being formed around the side port within the valve stem. In some cases, the metal punched out to form the side port may not be completely removed leaving a large burr projecting inwardly into the valve stem. It has been observed, in particular for ethanol-containing medicinal aerosol formulations, that there is a tendency for drug to build up in areas where it cannot be readily dislodged, e.g. such projections or burrs around the side port. A large medicament build-up and/or any subsequent dislodgement thereof could cause complete blockage of the valve stem. Furthermore, the tendency for ethanol to evaporate is far higher at the openings to the atmosphere, e.g. the valve stem side port. Thus, there is a tendency for medicament build-up in these regions, which could lead to blockage of the side port.

It has been reported that although it is possible to insert a die prior to punching the side port in order to minimize the formation of the burr within the valve stem. This technique leaves a sharp edge around the side port on the inner as well as the outer surface of the valve stem. The sharp edge on the outer surface is prone to damaging the diaphragm seal associated with the valve stem.

WO 99/55600 disclose metered dose valves having a machined and/or cold forged, preferably stainless steel, valve stem in which blockage problems are substantially reduced. The valve stems arc preferably fabricated by machining and/or cold forging and then drilling with a drill bit the passageway including the outlet as well as the side port. To avoid the formation of burrs around the side port within the valve stem, it is described to preferably insert and remove the drill bit at least twice during the drilling operation.

Laser drilling of valves stems to provide the side port has been reported in The Aerosol Handbook (M. Johnsen, 2^{nd} Edition, 1982, Wayne Doriand Co. p 164,) However, it is reported that by using laser beams, side ports as small as 0.13 mm have been made, but they are highly, subject to clogging and other problems.

DE3937460 discloses cutting opening in the side of conduits consisting of using a laser beam to cut around the contours of the openings while running a Liquid that is free of bubbles through the conduit.

### Summary of the Invention

There is an ongoing need for a method for providing a side port in a valve stem, in particular allowing for the provision of a valve stem having desirable structural qualities and/or blockage resistance.

Surprisingly, we have found that by filling and seating as fluid, such as water, into the passageway of the valve stem and then laser drilling a side port into the valve stem, a side port, and hence a valve stem having desirable structural qualities and/or blockage resistance can be provided.

It has been found that a number of detects occur during conventional laser drilling of valve stems. Backwall damage occurs due to impingement of excess leaser beam on the backwall, when the laser beam breaks through the wall being drilled. Due to the accumulation of re-solidified material on the periphery of the orifice exit, dross forms around the side port within the valve stem. Furthermore, downwardly ejected melt can also lead to the deposition of particles on the interior surface of the valve stem, in particular on the backwall. In valve stems, these defects can provide undesirable surfaces for medicament build-up or attachment of loose medicament particles, and thus increasing the tendency of blockage in the valve stem. These defects may also enhance the possibility and/or onset of corrosion within metal valve stems.

It has been found that by filling a fluid into the valve stem passageway and sealing the stem outlet, to substantially prevent the fluid from escaping through the outlet (before and) during laser drilling of the side port, backwall damage as well as the formation of dross and deposited particles can be significantly reduced or substantially prevented. The reduction or substantial prevention of the damage seems to be the result from two aspects. First, by temporarily sealing the stem outlet, upon beam breakthrough, the fluid is initially held within the passageway (e.g. it is not simply pushed or blasted through the outlet) as a barrier, absorbing and diffusing excess laser beam and thus substantially preventing impingement of the laser on the backwall, as well as impeding the deposition of particles. Secondly, after beam breakthrough, at least a part of the fluid (vaporized and/or as fluid) and, if any assist gas used in the laser drilling process, assist gas are then forced to escape or are pushed out the newly laser-drilled hole, hindering the formation of dross accumulation at the hole exit and again deposition of particles.

The interior of valve stems thus laser drilled, exhibit desirable structural and/or blockage resistance qualities. In particular, the side port exit within the valve stem, which is free or substantially free of dross and does not exhibit a circumferential projection or a sharp edge, exhibits an advantageous minimum of potential seeding surface for medicament deposition or build-up and thus exhibits advantageous blockage resistance properties.

Accordingly, the aspect of the present invention is the provision of method of manufacturing a valve stem for use in a metered dose dispensing valve for delivering medicament, said method comprising the steps:
a) providing a valve stem work-plece having a passageway with an outlet;
b) filling the passageway with a fluid;
c) sealing the outlet so as to seal the fluid within said passageway;
d) laser drilling a side port through the work-piece into the passageway; and
e) unsealing the outlet.

Desirably laser drilling is performed in conjunction with all assist gas.

Methods according to the present invention are applicable for plastic or metal valve components or valve stems, respectively.

Valve components/stems thus laser-drilled may be suitably subjected to cleaning and/or finishing procedures conventionally used for such cleaning and/or finishing.

Alternatively or in addition thereto, valve components/stems thus laser-drilled may be subjected to an abrasive or chemical cleaning or finishing process to remove any spatter which may have formed on the outer surface of the respective component during laser-drilling, e.g. about the periphery of the hole entry, as a result of outwardly ejected melt. For metal valve components/valves, it has been found that when oxygen is preferentially used as an assist gas, any spatter and/or stray re-solidified particles are typically present in the form of a metal oxide and such oxide can be conveniently dissolved in an acid washing. Advantageously the use of such an acid washing as chemical cleaning process can also simultaneously bring about a desirable passivation of the metal surface.

An additional aspect of the present invention is a valve stem obtained according to a method described above.

In a further aspect, the invention provides a metered dose valve for delivering medicament comprising such a valve stem. In yet another aspect, the invention provides a medicinal metered dose dispenser comprising such a valve stem, more particularly a metered dose inhaler comprising such a valve stem.

The dependent claims define further embodiments of the invention.

The invention, its embodiments and further advantages will be described in the following with reference to the following drawings.

### Brief Description of the Drawings

Figure 1 shows a cross-section through a metered dose aerosol dispenser.
Figure 2 shows a cross-section through a deep drawn metal valve stem of the prior art
Figure 3 shows a cross-section through a machined and/or cold forged metal valve stem of the prior art.
Figure 4 shows scanning electron microscopy (SEM) micrographs of the underside (hole exit) of side ports in (a) deep drawn valve stem made of Stainless Steel type 305 ("SS 305")and (b) a machined SS 305 valve stem, both after barrel-cleaning.
Figure 5 represents schematically and pictorially (a) a preferred method for laser drilling a side port in a valve stem work piece and (b) a resulting valve stem thereof.
Figures 6 (a) and (b) show SEM micrographs of a SS 305 vale stem obtained in accordance with a preferred method of the invention (in particular in accordance to Example 1).
Figure 7 (a) and (b) show SEM micrographs of a SS 305 valve stem obtained after conventional laser-drilling (Example A).
Figure 8 shows a cross-section through a deep drawn metal valve stem obtained through a preferred method of manufacturing a valve stem.
Figure 9 illustrates schematically a preferred system for laser drilling a side port in a valve stem.
Figures 10 (a) and (b) show SEM micrographs of a SS 305 valve stem obtained after laser-drilling a work-piece filled with water but without sealing the outlet (Example B).

### Detailed Description of Invention

It is to be understood that the present invention covers all combinations of particular and preferred aspects of the invention described herein.

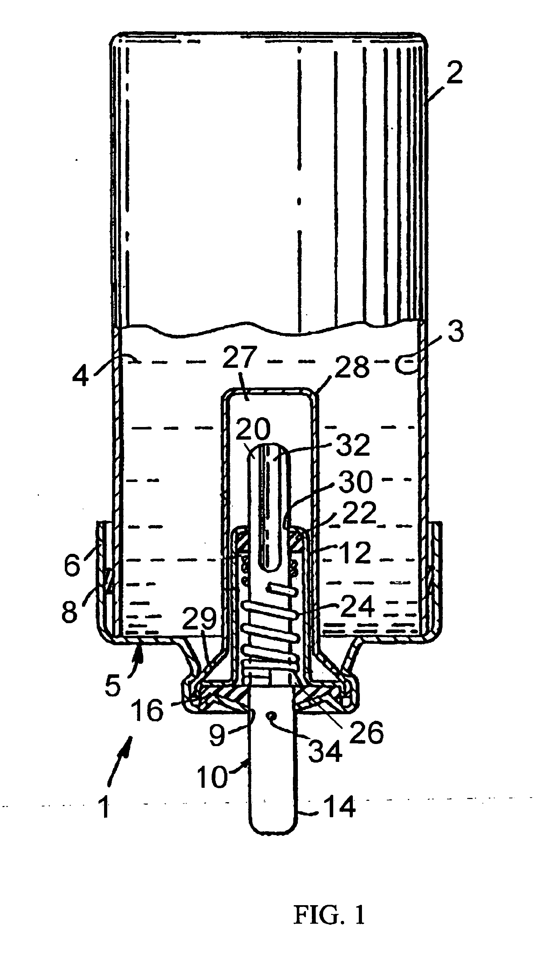

Figure 1 shows a typical metered dose aerosol dispenser (1), in particular a metered dose inhaler. As illustrated in the dispenser of Figure 1, such a dispenser generally includes a canister (2) equipped with a metering dose valve (generally indicated by (5)), defining a formulation chamber (3), which contains an aerosol formulation (4). The valve (5) typically comprises a ferrule (6) having a central portion retaining the components of the valve and a circumferential flange for crimping around the neck of an aerosol container to secure the valve to the container. A gasket (8) is clamped between the neck of the aerosol container and ferrule ensuring a gas-tight seal. The valve comprises a valve stem (generally shown at (10)) extending through a central aperture (9) in the ferrule through a metering chamber (12). The outer end (14) of the valve stem projects from the metering chamber (12) and is in sealing engagement with elastomeric diaphragm (16). The inner end (20) of the valve stem projects through the metering chamber (12) in sealing engagement with a tank seal (22). A spring (24) is positioned within the metering chamber, one end abutting the tank seal (22) and the other end abutting a flange (26) extending around an intermediate portion of the valve stem. The spring (24) urges the valve stem to its non-dispensing position as shown in Figure 1. The dispenser may include a retaining cup (28), which extends around the metering chamber (12). (Often, it is desirable to use a retaining cup, when the aerosol formulation is a suspension, while for solution aerosol formulations typically a retaining cup is not applied.) The walls of the retaining cup define a retention chamber (27) and an aperture (29) allowing open communication between the retention chamber and the formulation chamber.

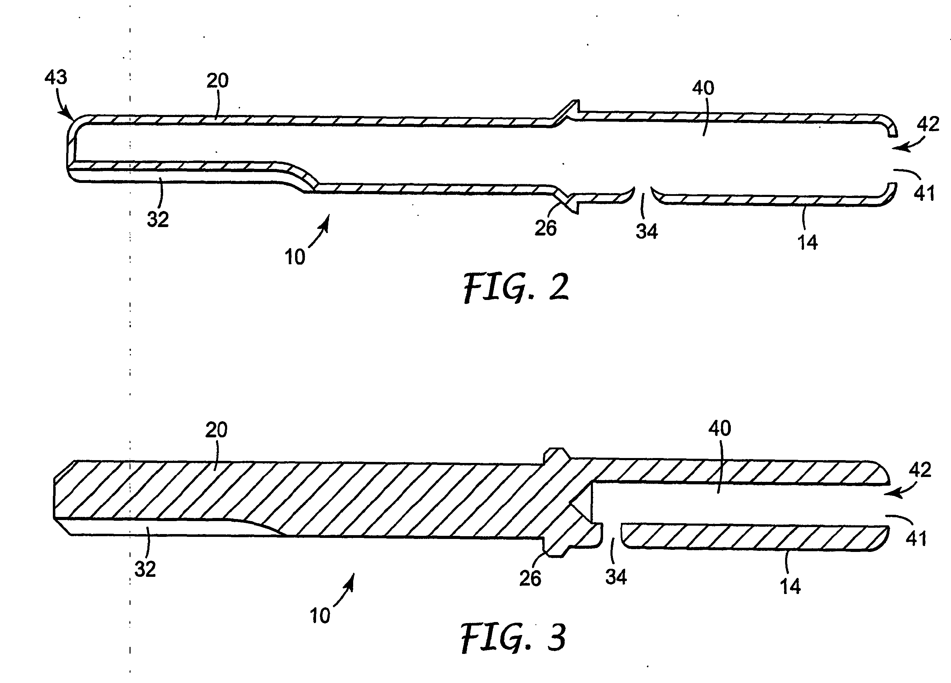

In its non-dispensing position, contents of the retention chamber or, if a retaining cup is not used, the formulation chamber, may enter the metering chamber (12) by passing through the groove (32) on the inner end (20) of the valve stem through the inlet aperture (30) of the metering chamber. When the valve stem is moved to its dispensing position (not shown) the groove (32) passes outside the tank seal (22) and thus the inner end of the valve stem completes a seal preventing flow of aerosol formulation into and out of the metering chamber through the filling end. In its dispensing position, the side port (34) of the valve stem passes through the diaphragm into the metering chamber. The side port (34) is in communication with a central outlet passageway (see Figures 2 and 3) allowing the contents of the metering chamber to be dispensed from the valve.

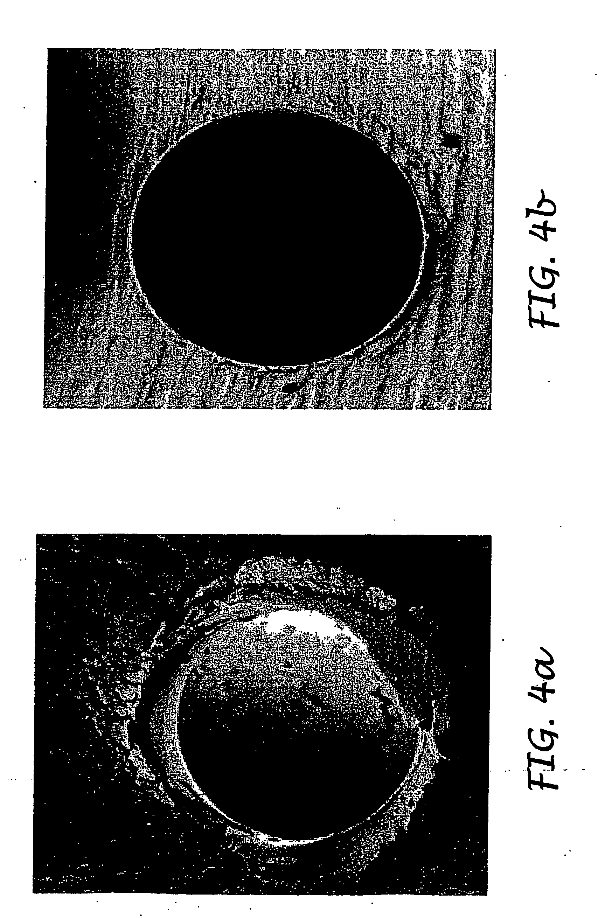

Figure 2 represents a cross-section through a conventional deep drawn valve stem, which has been used in a metered dose dispensing valve. The valve stem (10) comprises a closed end (43), an outer portion (14), an inner portion (20), a flange (26), groove (32) and side port (34) as described with reference to Figure 1. The valve stem is hollow having a central passageway (40). The outlet end (42) of the valve stem is curved inwardly restricting the size of the central passageway (40) at the outlet (41). The side port (34) is typically formed by punching. Figure 4 (a) shows a SEM micrograph of a typical underside (hole exit) of such a punched side port after barrel cleaning. As can be seen from Figure 4(a), the punching operation results in a circumferential projection with a number of burrs being formed around the side port projecting inwardly into the valve stem. As described above, the projection and burrs can act as a seeding surface for deposition and/or accumulation of medicament, and thus increasing the tendency of the valve stem to block. Figure 3 represents a cross-section through a machined and/or cold-forged valve stem. Machined valve stems of the type shown in Figure 3 have been used in metered dose dispensing valves. The valve stem (10) comprises an outer end (14), inner end (20), flange (26), groove (32), side port (34) and central passageway (40). The side port and central passageway are formed by drilling with a drill bit and are arranged such that the side port joins the passageway near the inner end of the passageway. To avoid the formation of burrs, the drill bit is typically inserted and removed at least twice during the drilling operation. Figure 4 (b) shows a SEM micrograph of a typical underside (hole exit) of side port in such a machined valve stem after barrel cleaning. As can be seen from Figure 4(b), the underside of the side port exhibits a substantially better structural quality than that of the punched side port of deep drawn valve stems. Although blockage problems are substantially reduced with such machined valve, as can be seen in Figure 4 (b) such bit-drilling leaves a sharp edge around the side port on the interior surface of the valve stem. This edge may also provide a seeding surface for medicament deposition.

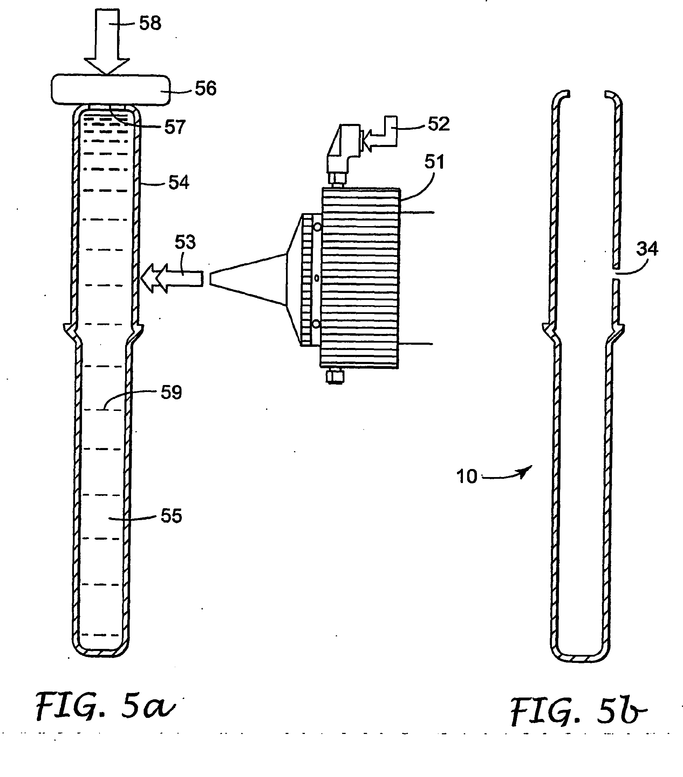

Referring to Figure 5(a), which illustrates pictorially a preferred method for laser drilling a hole in a work-piece (54), here in particular a deep drawn metal stem work-piece, the cavity or passageway (55) of the work-piece is filled with a fluid (59), the outlet (57) of the work-piece is sealed, and the hole or side port is laser-drilled (direction of laser beam is generally indicated by the arrows (53)) through the work-piece into the cavity or passageway. Preferably the laser drilling is performed in conjunction with an assist gas (arrow (52) generally indicates the assist gas input near the laser output aperture (51)). Preferably, the outlet (57) of the work-piece is sealed with a mechanical constriction (56), which is held in place by an applied force (as generally indicated by the arrows (58)). Suitably after laser drilling, the outlet is unsealed (not illustrated). The resulting valve stem (10) with the side port (34) is shown Figure 5(b).

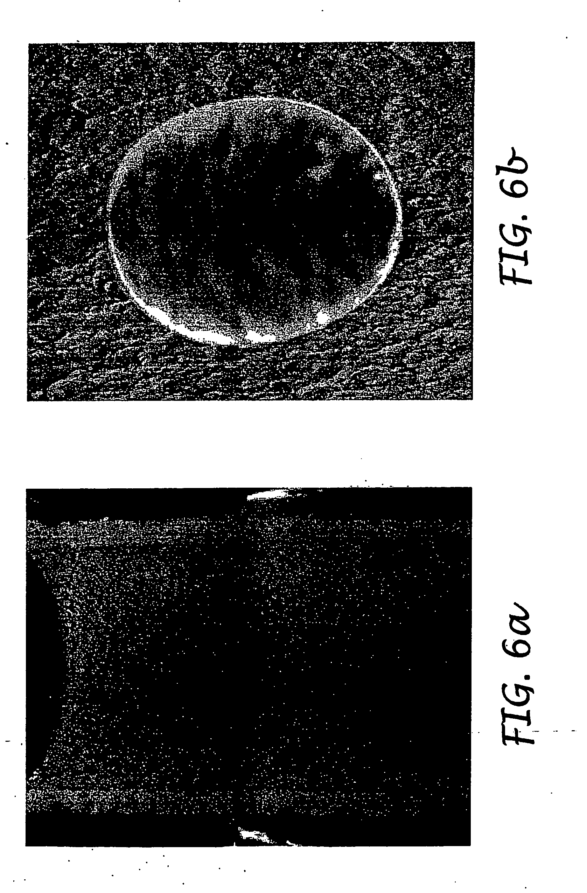

Figure 6(b) shows a SEM micrograph of a typical underside (hole exit) of side port provided in accordance with methods of the present invention. It is to be noted that Figure 6 shows micrographs of a valve stem (of Example 1 described below) taken off press without any subsequent cleaning or finishing. As can be readily seen in Figure 6(b), in particular in comparison to Figures 4(a) and (b), the underside of the side port shows very desirable structural properties, being free of burrs, a circumferential projection and a sharp edge typical of known valve stems used in metering valves.

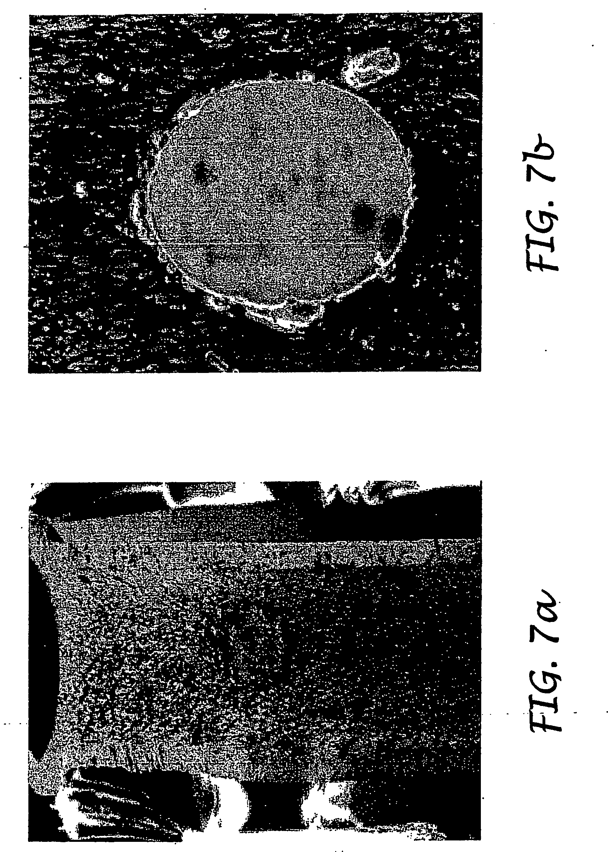

Also in comparison to a side port obtained by conventional laser drilling, the undersides of side ports as well as valve stems obtained accordance methods of present invention show very desirable structural qualities. Figure 7 shows SEM micrographs of a valve stem, in particular the backwall of the valve stem (Figure 7(a)) and the hole exit of the side port (Figure 7(b)) obtained by conventional laser drilling (i.e. Example A described below). As can be seen in a comparison of Figures 6(b) and 7(b) of the side port undersides, the hole exit of the conventional laser drilled side port is irregular with accumulated dross and extensive particle deposition is observed on the underwall about the hole exit, while the hole exit of side port obtained in accordance with the invention is substantially free of dross and the underwall is substantially free of deposited particles. As can be seen in a comparison of Figures 6(a) and 7(a) of the backwall of the valve stems, the backwall of the conventional laser drilled valve stem shows extensive damage and deposited particles, while the backwall of valve stem drilled in accordance with the invention is substantially free of backwall damage and deposited particles.

Due to the desirable structural properties of the interior of valve stems laser drilled in accordance with methods of the invention, the valve stems are substantially free of seeding surfaces for the deposition or accumulation of medicament and hence show enhanced blockage resistance. Methods in accordance with the invention of filling and sealing within a cavity a fluid prior to laser drilling can be also advantageously used in providing a hole in other valve components having a cavity (besides valve stems). For example the method can be desirably used to provide aperture(s) in a retaining cup or a metering chamber.

Diameters for the laser-drilled hole or side port may suitably range from 0.1 to 1.1 mm: for side ports of valve stems, more particularly 0.3 to 0.8 mm and most particularly 0.35 to 0.75 mm, and for apertures in retaining cups and metering chambers, more particularly 0.6 to 1.0 mm and most particularly 0.75 to 0.95 mm.

Desirably laser drilling is performed in conjunction with an assist gas. Suitable assist gases include assist gases conventionally used in laser drilling, such as oxygen, argon, nitrogen, helium or air. For laser-drilling metal valve components/stems, oxygen as assist gas is preferred.

For ease in manufacturing and processing, the fluid is desirably a fluid at ambient temperature (e.g. about 22°C). Preferably the fluid is a liquid or a liquid-based fluid (e.g. solutions, suspensions, gels, colloidal dispersions including foams, emulsions and sols); more preferably a liquid or liquid-based fluid having a dynamic viscosity less than 33000 mPa·s, preferably determined according to Standard Test Method ASTM D2196-99 (Test method A). Water and aqueous fluids are particularly suitable.

In methods of manufacturing plastic valve stems, the valve stem work-piece may be suitably provided by molding, in particular injection thermoplastic molding. More particularly, a valve stem blank having one or more exterior contours of the valve stem may be provided by molding, in particular by injection thermoplastic molding, while the passageway and outlet may be formed by drilling, in particular by laser drilling.

In methods of manufacturing metal, preferably stainless steel, valve stems, the valve stem work-piece may be suitably provided by machining and/or cold forging. More particularly, a valve stem blank having one or more exterior contours of the valve stem can be provided by machining and/or cold forging, while the passageway and outlet may be formed by drilling, in particular by laser drilling.

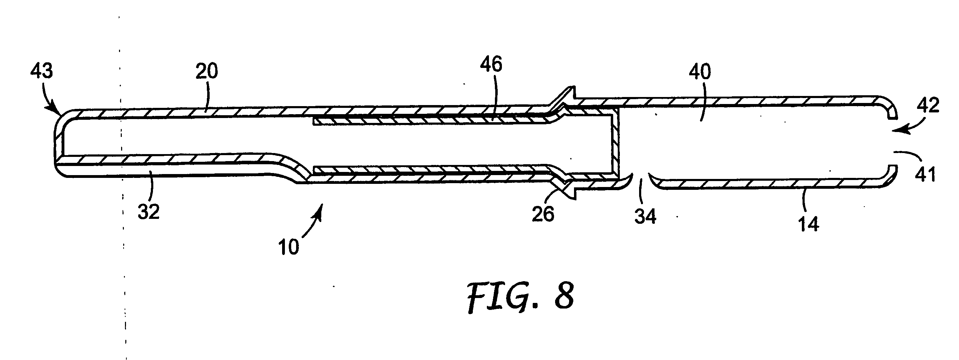

Alternatively, in the manufacturing of metal, preferably stainless steel, valve stems, the valve stem work-piece may be desirably provided by deep drawing. Preferably the work-piece is deep drawn having one or more exterior contours of the valve stem. For deep drawn valve stems, blockage resistance can be advantageously further enhanced by reducing dead volume within the valve stem, so that aerosol formulation only contacts and passes through the portion of the valve stem necessary to convey the formulation to the outlet (i.e. between the side port and the outlet of the valve stem). Desirably the manufacture of deep drawn valve stems include steps of: inserting into the passageway a plug, such that a portion of the interior of the passageway between the closed end of the valve stem and the side port is sealed off; and curling the outlet end of the stem inwardly. More desirably the plug is inserted, such that the interior of the valve stem from the closed end of the valve stem and substantially up to the side port is sealed off. The plug may be inserted either before or after laser drilling the side port, more particularly either before the passageway is filled or after the outlet is unsealed. The curling of the outlet end may also be performed either before or after laser drilling, more particular either before sealing the outlet or after unsealing the outlet, but in every case after the plug has been inserted. Figure 8 shows a cross-section of a preferred deep drawn valve stem obtainable by such a method. As can be seen in the preferred embodiment of Figure 8, the plug (46), which forms an interference fit within the valve stem, is located between the closed end (43) and the side port (34) (more substantially just below the side port). This advantageously reduces the amount of dead volume within the valve stem, thus enhancing blockage resistance. Preferably the plug is made of stainless steel.

Valve components/stems thus laser-drilled may be suitably subjected to cleaning and/or finishing procedures conventionally used for the cleaning and/or finishing, such as bright annealing, barreling or passivation for metal stems. Barreling is typically performed by tumbling a plurality of valve stems in a container with a water and detergent mixture; the detergent is typically a mixture of anionic and non-anionic surfactants and organic acids. In passivation, a metal (in particular stainless steel) valve stem is washed with acid to enhance the formation of a protective, passive metal (chromium) oxide film. Accordingly the valve stems are preferably treated with an acid solution of nitric acid (at 5 to 50% concentration) or citric acid (1 to 10% concentration) or other appropriate compound to remove surface contamination so as to enhance spontaneous passivation.

Alternatively or in addition thereto, valve components/stems thus laser-drilled may be subjected to an abrasive or chemical cleaning or finishing to remove any spatter or stray residual particles. Suitable abrasive cleaning or finishing may include buffing, shot-blasting or washing with acids. The latter two exemplary cleaning methods are particularly suitable for metal valve component/stems, and the use of acid washing as a cleaning method is particular advantageous when the laser drilling was peformed in conjunction with oxygen assist gas. In shot blasting the outer surface is blasted, preferably spot blasted, with fine particles, such as alumina having a particle size of 10 to 100 µm under high pressure, such as 3 to 5 bar for about 1 to 2 seconds. Desirably a metal pin or shaft may be inserted into the component/stem behind the laser-drilled hole to protect the backwall of the component/stem during the shot blasting.

Due to their desirable structural qualities, valve components/stems obtainable and provided according to the methods of the invention are particular suitable for use in metering valves for the delivery of medicament, as well as medicinal metered dose dispensers, more particularly metered dose inhalers.

### Examples

### Materials used

Valve Stem Work-piece All the following laser drilling experiments were performed with Stainless Steel valve stem work-pieces manufactured by deep drawing out of Stainless Steel Type 305 ("SS 305") strip. The stems had an overall length of 24.4 mm, wall thickness 0.2mm, an external flange between the open portion and the closed portion as well as an external groove. The central bore or passageway had an internal diameter of 2.4 mm at the position where the side port was to be drilled. Unless stated otherwise, the outlet end of the stem was curled inwardly and the outlet had a diameter of 1.6 mm. The internal volume of the stem was 85 microlitres. During the deep drawing process, the steel was coated with drawing oil (ADFORMAL™ EP 130 see below), which was not removed prior to laser drilling.

### Tap Water

Gel: Aqua-Gel™ II Cable Pulling Lubricant, supplied by Ideal Industries Inc.
Deb™ hand-washing fluid, supplied by Deb Limited.
Oil: Adformal™ EP130 extreme pressure metal forming oil, supplied by BP Lubricants and Special Products Limited.
Stainless steel shaft with a diameter of 2.2 mm
Plastic-coated wire with a diameter of 1.5 mm
Polytetrafluoroethylene (PTFE) sheet with a width of 2.2 mm
Blu-Tack^{™} - a low tack adhesive putty manufactured by Bostik Limited, Leicester, UK.

### Laser Drilling

An Electrox Scorpion 400 W pulsed Nd:YAG laser (supplied by Electrox, Letchworth, UK), emitting at 1.06 µm wavelength, was used to drill holes in the valve stem work-pieces.

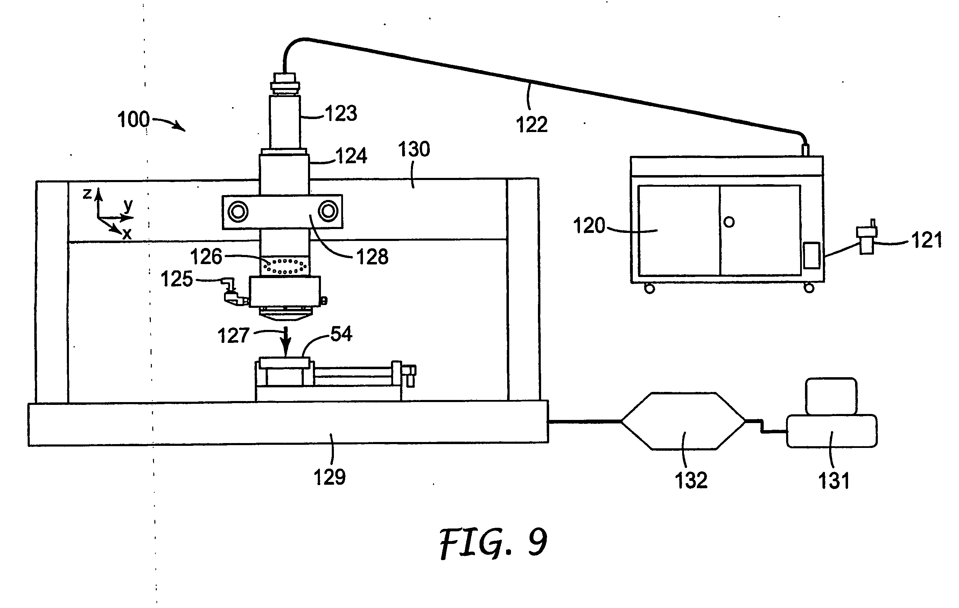

Figure 9 illustrates schematically the arrangement of the laser drilling system (100) used for the following examples. The laser beam (127) was generated by the source (120), which was operated by a hand-held controller (121). The beam was conveyed by an 8 m long, 600 µm core diameter optical fibre (122) that was end-connected to the fibre output tube (123). The fibre output housing (124) contained the fibre output tube, lenses, e.g. the focussing lens (126), and an assist gas nozzle that was supplied by an assist gas input (125). Any excess drawing oil that had been on the work-piece was blown away by the assist gas leaving a thin film on the outer surface. The work-piece (54) was clamped in a vice on a platform (129). The fibre output housing (124) was mounted on a 3-axis CNC table (130) by a mounting (128), which was movable relative to the platform (129) with a traverse range of 500 x 540 x 165 mm³ and a maximum traverse speed of up to 300 mm/s. Such movement was controlled from a personal computer (131) via a CNC table controller (132).

A focusing lens with a focal length of 120 mm was used in all the experiments. The focal plane position was placed on the material surface with a nozzle-work-piece distance of 1.7 mm. The target hole size was 0.47 mm diameter. Experiments were carried out with the laser positioned vertically or horizontally, with the stem work-piece correspondingly positioned horizontally or vertically, respectively. It is to be appreciated that the positioning of the laser and work-piece does not have a material effect on the results of the laser drilling. However for the examples in which the stem work-piece was filled with a fluid it is convenient to have the stem work-piece positioned vertically with then the laser positioned horizontally.

In the examples in which the stem work-piece was filled with a fluid, the fluid was injected into the valve stem blank using a 10 ml syringe with a 1.27 mm diameter regular-bevel point needle. In the examples in which the stem opening was sealed, a compressible stem-constriction was pressed onto the stem-opening before and during laser drilling. The stem-constriction was created by placing a piece of Blu-Tack^{™} at the stem-opening and pressing physically with the index finger. In an automated process, the stem-constriction could be made from silicone rubber, such as used to make O-rings.

It was found in preliminary experiments that, to drill a hole in AISI 305 Stainless Steel stem work-pieces having a wall thickness 0.2 mm, a single or a double laser pulse was effective. However, a double pulse of 7 kW peak power was preferred because it produces more consistent holes. In the experiments that follow, a double pulse of 7 kW peak power, a pulse width of 0.3 ms, energy per pulse 2.1 J and pulse frequency of 20 Hz were used, unless otherwise stated. An assist gas, oxygen unless stated otherwise, at a pressure of 3 bar (42 liters per minute flow rate) unless indicated otherwise, was also used. A rectangular pulse shape was used.

### Analysis

In order to analyze the laser-drilled valve stems a precision cutter was employed to section along the valve stems. After the stems were sectioned for a length of 17 mm, the stems were physically split open to reveal the underwall (underside) and backwall of the stems. On the underwall of the stems the extent of dross deposition around the hole exit was analyzed; while the backwall was analyzed for any damage as a result of the impingement of excess laser beam. Both samples were analysed for scattered particle deposition. Preliminary analysis was carried out with an optical microscope. Further analysis was then carried out using a scanning electron microscope (SEM).

### Examples 1 to 10 and Examples A to E

**Table 1**

| Example | Barrier | Constriction | Laser Position | Assist gas | Pulse width (ms) | Frequency (Hz) |
|---|---|---|---|---|---|---|
| A | None | None | Vertical | O₂ | 0.3 | 20 |
| B | Water | None | Horizontal | O₂ | 0.4 | 20 |
| 1 | Water | Yes | Horizontal | O₂ | 0.4 | 20 |
| 2 | Water | Yes | Horizontal | O₂ | 0.3 | 20 |
| C | Pumped Water | None | Horizontal | O₂ | 0.4 | 20 |
| D | Water jet spray | None | Vertical | O₂ | 0.3 | 20 |
| 3 | Water | Yes | horizontal | O₂ (1 bar) | 0.4 | 20 |
| 4 | Water | Yes | horizontal | O₂ (2 bar) | 0.4 | 20 |
| 5 | Water | Yes | horizontal | O₂ (4 bar) | 0.4 | 20 |
| 6 | Water | Yes | horizontal | O₂ (6 bar) | 0.4 | 20 |
| 7 | Water | Yes | horizontal | O₂ | 0.4 | 100 |
| 8 | Water | Yes | Horizontal | N₂ | 0.5 (peak power of 5.4 kW) | 20 |
| E | Water | None | Horizontal | N₂ | 0.5 (peak power of 5.4 kW) | 20 |
| 9 | Water | Yes | horizontal | Ar | 0.4 | 20 |
| 10 | Water | Yes | horizontal | Ar | 0.5 | 20 |

### Example A:

Figures 7 (a) and (b) show SEM micrographs of a SS 305 valve stem laser-drilled without the use of any barrier material. As can be seen from Figure 7 (a), the backwall was damaged by the excess laser beam leaving behind a damaged spot of about 1 mm and a significant amount of particle deposition. From Figure 7 (b), it can be noted that a significant amount of dross was accumulated on the hole exit.

### Example B

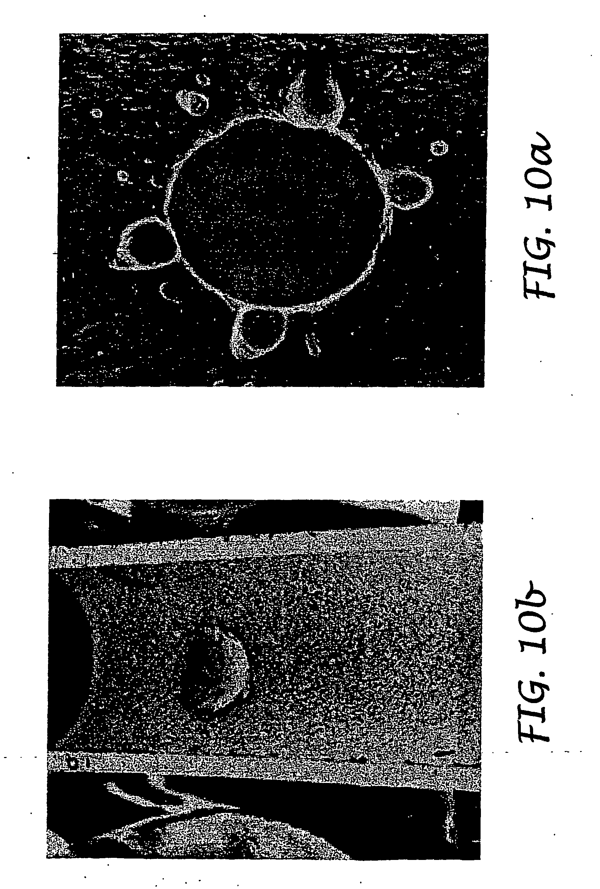

In this example, tap water was filled into work-piece before laser-drilling. However no stem constriction was used. Figures 10 (a) and (b) show SEM micrographs of a resulting SS 305 valve stem after laser drilling the side port. As can be seen from Figure 10 (a), local backwall damage of approximately 1mm diameter could be noted. The dross accumulation around the hole exit is extensive, with large particles clinging to periphery of the hole exit as can be seen in Figure 10(b).

### Examples 1 and 2

Figures 6 (a) and (b) show SEM micrographs of SS 305 valve stems obtained by laser-drilling work-pieces, whose outlet were sealed with a stem constriction after filling the work-piece with water (Example 1). Comparing the results with those of drilling without any barrier or with water but without sealing (Examples A and B), it can be seen that damage to the backwall as well as deposition of particles on the backwall were prevented. No discernible accumulation of dross around the periphery of the hole exit could be noted (as shown in Figure 6 (b)). In addition, the underwall of the stem appears to be substantially free from particle deposition. The results of Example 2, in which a pulse width of 0.3 ms, instead of 0.4 ms was used, were similar to Example 1. In Examples 1 and 2 and all other following examples in which a fluid was filled and sealed within the cavity of the stem work-piece, it was noted that after beam breakthrough, fluid within the stem was pushed out of the newly drilled hole in form of a fan-like spray.

The results of these experiments as well as the results of examples C to E and examples 3-10 are summarized in the following table.

**Table 2**

| **Example.** | **Results** | | |
|---|---|---|---|
| | **Dross** | **Backwall Damage** | **Particle Deposition** |
| A | Yes | = 1 mm spot | Significant |
| B | Yes | = 1 mm spot (melt) | Significant |
| 1 | No, minimal | None | No, minimal |
| 2 | No, minimal | None | No, minimal |
| C | Yes | = 2 mm spot (melt) | Some |
| D | Yes | = 1 mm spot | Some |
| 3 | No, minimal | None | No, minimal |
| 4 | No, minimal | None | No, minimal |
| 5 | No, minimal | None | No, minimal |
| 6 | No, minimal | None | No, minimal |
| 7 | No, minimal | None | No, minimal |
| 8 | No, minimal | None | No, minimal |
| E | Yes | = 1 mm spot | Some |
| 9 | No, minimal | None | No, minimal |
| 10 | No, minimal | None | No, minimal |

### Example C:

Using a 10 ml syringe fixed to a 1.27 mm diameter regular-bevel point needle, water was 'pumped' into the stems before and during laser drilling in order to continuously fill water into stems even when and after beam breakthrough occurs. The results, were similar to those of Examples A and B, an about 2 mm diameter spot backwall damage was noted together with a significantly amount of dross at the hole exit. Some particle deposition was noted.

### Example D:

Throughout the laser drilling a water jet spray was directed into the opening of the valve stem, using an airbrush, at approximately 20 psi. The nozzle of the airbrush was held at distance of 10 mm to the opening of the stem. The results, were similar to those of Examples A to C, an about 1 mm diameter spot backwall damage was noted together with a significantly amount of dross at the hole exit and some particle deposition.

Thus, local backwall damage and particle deposition were prevented completely using the stem constriction, thus providing a cleaner drilling than drilling with no such constriction. In addition, the underwall of the stem appeared to be substantially free from particle deposition and no discernible accumulation of dross around the periphery of the hole exit could be noted when using the stem constriction.

Examples 3-6 - Use of different assist gas pressures of oxygen, i.e. lower pressures of 1 and 2 bars as well as higher pressures of 4 and 6 bar all gave optimal results, showing no significant difference to the results of Examples 1 and 2 performed with an assist gas pressure of 3 bar.

Example 7 - The use of a higher pulse frequency did not affect the results. Again the resulting valve stem was free or substantially free of backwall damage, particle deposition and dross accumulation.

Examples 8 to 10 and E - The results for Examples 8 to 10 were similar to those of Examples 1 to 7, while the results of example E were similar to example B. Thus, the use of nitrogen or argon assist gas in conjunction with constricting the stem outlet also allows the production of valve stems whose interior showed desirable structural qualities, free or substantially free of backwall damage, particle deposition and dross accumulation at the hole exit.

### Examples 11 to 13 and Examples F and G

Other fluids, such as gels, oils, solutions were examined as summarized in Table 3.

**Table 3**

| Example | Barrier | Constriction | Laser Position | Assist gas | Pulse width (ms) | Frequency (Hz) |
|---|---|---|---|---|---|---|
| 11 | Gel | Yes | horizontal | O₂ | 0.3 | 20 |
| F | Gel | None | horizontal | O₂ | 0.3 | 20 |
| 12 | Oil | Yes | horizontal | O₂ | 0.3 | 20 |
| G | Oil | None | horizontal | O₂ | 0.3 | 20 |
| 13 | Deb™ fluid | Yes | horizontal | O₂ | 0.3 | 20 |

The results are these experiments are listed below:

**Table 4**

| **Example** | **Results** | | |
|---|---|---|---|
| | **Dross** | **Backwall Damage** | **Particle Deposition** |
| 11 | No, minimal | None | No, minimal |
| F | Yes | Some, spot mainly melt | No, minimal |
| 12 | No, minimal | Very faint, not clearly visible on SEM | No, minimal |
| G | Yes | = 0.4 mm spot mainly melt. | Minimal |
| 13 | No, minimal | None | No. minimal |

The use of other fluids together with sealing the outlet with a stem constriction was equally effective, backwall damage, particle deposition, dross accumulation were either completely prevented or reduced considerably in comparison to results of the examples in which no stem constriction was applied.

### Comparative H to J

Solids as barriers were examined as summarized in the following table. In each case the barrier was inserted into the cavity of the work-piece before drilling. For examples I and J, the outlet end of the stem work-piece was not curled, and thus the outlet had a diameter of about 2.4 mm in order to allow the insertion of the PTFE sheet and Stainless Steel ("SS") shaft.

**Table 5**

| Example | Barrier | Constriction | Laser Position | Assist gas | Pulse width (ms) | Frequency (Hz) |
|---|---|---|---|---|---|---|
| H | Plastic wire | None | Vertical | O₂ | 0.3 | 20 |
| I | PTFE sheet | None | Vertical | O₂ | 0.3 | 20 |
| J | SS shaft | None | horizontal | O₂ | 0.4 | 20 |

The results are summarized in Table 6.

**Table 6**

| **Example** | **Results** | | |
|---|---|---|---|
| | **Dross** | **Backwall Damage** | **Particle Deposition** |
| H | Yes | = 0.5 mm spot (melt) | Significant |
| I | Yes | None | Significant |
| J | Yes | None | Significant |

Although in certain cases, the use of a solid barrier prevented backwall damage, in each case significant amounts of dross accumulation and particle deposition (in particular on the underwall) were noted for the resulting valve stems.

## Claims

1. A method of manufacturing a valve stem (10) for use in a metered dose dispensing valve for delivering medicament, said method comprising the steps of:
a) providing a valve stem work-piece (54) having a passageway (55) with an outlet (57);
b) filling the passageway with a fluid;
c) sealing the outlet so as to seal the fluid within said passageway;
d) laser drilling a side port (34) through the work-piece into the passageway;
e) unsealing the outlet.

2. A method of manufacturing a valve stem (10) according to claim 1, wherein the valve stem is plastic and the valve stem work-piece (54) is provided by molding, in particular by injection thermoplastic molding.

3. A method of manufacturing a valve stem (10) according to claim 1, wherein the valve stem is plastic and the step of providing a valve stem work-piece (54) includes the steps:
i) providing a valve stem blank having one or more exterior contours of the valve stem by molding, in particular by injection thermoplastic molding; and
ii) forming the passageway (55) and outlet (57) by drilling.

4. A method of manufacturing a valve stem (10) according to claim 1, wherein the valve stem is metal and the valve stem work-piece (54) is provided by machining and/or cold forging.

5. A method of manufacturing a valve stem (10) according to claim 1, wherein the valve stem is metal and the step of providing the valve stem work-piece (54) includes the steps:
i) providing a valve stem blank having one or more exterior contours of the valve stem by machining and/or cold forging;
ii) forming the passageway (55) and outlet (57) by drilling.

6. A method of manufacturing a valve stem (10) according to claim 3 or claim 5, wherein the passageway (55) and outlet (57) are formed by laser drilling.

7. A method of manufacturing a valve stem (10) according to claim 1, wherein the valve stem is metal and the valve stem work-piece (54) is provided by deep drawing.

8. A method of manufacturing a valve stem (10) according to claim 7, wherein the method further comprises the steps
f) inserting into the passageway a plug (46), such that a portion of the interior of the passageway between the closed end (43) of the valve stem and the side port (34) is sealed off; and
g) curling outlet end (41) of the stem inwardly,
wherein the step (f) of inserting the plug is performed either before step b) or after step
e) and wherein the step (g) of curling the outlet end is performed either before step b) or after step e), but after inserting the plug.

9. A valve stem (10) obtained according to the method of any one of claims 1 to 8

10. A metered dose valve (5) for delivering medicament comprising a valve stem according to claim 9.

11. A medicinal metered dose dispenser (1) comprising a valve stem according to claim 9.

12. A dispenser according to claim 11 wherein the dispenser is a metered dose inhaler.

## Patentansprüche

1. Verfahren zur Herstellung eines Ventilschafts (10) zur Verwendung in einem Dosierabgabeventil zur Abgabe eines Medikaments, wobei das Verfahren die folgenden Schritte umfasst:
a) Bereitstellen eines Ventilschaftwerkstücks (54) mit einem Kanal (55) mit einem Auslass (57);
b) Füllen des Kanals mit einem Fluid;
c) Versiegeln des Auslasses, um so das Fluid in dem Kanal zu versiegeln;
d) Laserbohren einer Seitenöffnung (34) durch das Werkstück in den Kanal;
e) Entsiegeln des Auslasses.

2. Verfahren zur Herstellung eines Ventilschafts (10) nach Anspruch 1, wobei der Ventilschaft aus Kunststoff ist und das Ventilschaftwerkstück (54) durch ein Formverfahren, insbesondere durch thermoplastischen Spritzguss, bereitgestellt wird.

3. Verfahren zur Herstellung eines Ventilschafts (10) nach Anspruch 1, wobei der Ventilschaft aus Kunststoff ist und der Schritt des Bereitstellens eines Ventilschaftwerkstücks (54) die folgenden Schritte enthält:
i) Bereitstellen eines Ventilschaftrohlings mit einer oder mehreren Außenkonturen des Ventilschafts durch ein Formverfahren, insbesondere durch thermoplastischen Spritzguss; und
ii) Ausbilden des Kanals (55) und Auslasses (57) durch Bohren.

4. Verfahren zur Herstellung eines Ventilschafts (10) nach Anspruch 1, wobei der Ventilschaft aus Metall ist und das Ventilschaftwerkstück (54) durch maschinelle Bearbeitung und/oder Kaltumformung bereitgestellt wird.

5. Verfahren zur Herstellung eines Ventilschafts (10) nach Anspruch 1, wobei der Ventilschaft aus Metall ist und der Schritt des Bereitstellens des Ventilschaftwerkstücks (54) die folgenden Schritte enthält:
i) Bereitstellen eines Ventilschaftrohlings mit einer oder mehreren Außenkonturen des Ventilschafts durch maschinelle Bearbeitung und/oder Kaltumformung; und
ii) Ausbilden des Kanals (55) und Auslasses (57) durch Bohren.

6. Verfahren zur Herstellung eines Ventilschafts (10) nach Anspruch 3 oder Anspruch 5, wobei der Kanal (55) und Auslass (57) durch Laserbohren ausgebildet werden.

7. Verfahren zur Herstellung eines Ventilschafts (10) nach Anspruch 1, wobei der Ventilschaft aus Metall ist und das Ventilschaftwerkstück (54) durch Tiefziehen bereitgestellt wird.

8. Verfahren zur Herstellung eines Ventilschafts (10) nach Anspruch 7, wobei das Verfahren ferner die folgenden Schritte enthält:
f) Einsetzen eines Stopfens (46) in den Kanal, so dass ein Abschnitt des Inneren des Kanals zwischen dem abgeschlossenen Ende (43) des Ventilschafts und der Seitenöffnung (34) versiegelt ist; und
g) Eindrehen des Auslassendes (41) des Schafts, wobei der Schritt (f) des Einsetzens des Stopfens entweder vor Schritt b) oder nach Schritt e) stattfindet und wobei der Schritt (g) des Drehens des Auslassendes entweder vor Schritt b) oder nach Schritt e), aber nach dem Einsetzen des Stopfens stattfindet.

9. Ventilschaft (10), erhalten nach dem Verfahren eines der Ansprüche 1 bis 8.

10. Dosierventil (5) zur Abgabe eines Medikaments, umfassend einen Ventilschaft nach Anspruch 9.

11. Medizinischer Dosierspender (1), umfassend einen Ventilschaft nach Anspruch 9.

12. Spender nach Anspruch 11, wobei der Spender ein Dosierinhalator ist.

## Revendications

1. Procédé de fabrication d'une tige de soupape (10) pour l'utilisation dans une soupape de distribution de dose mesurée pour distribuer des médicaments, ledit procédé comprenant les étapes consistant à :
a) fournir une pièce de tige de soupape (54) ayant un passage (55) avec une sortie (57) ;
b) remplir le passage avec un fluide ;
c) sceller la sortie de manière à sceller le fluide à l'intérieur dudit passage ;
d) percer au laser un orifice latéral (34) à travers la pièce dans le passage ;
e) et desceller la sortie.

2. Procédé de fabrication d'une tige de soupape (10) selon la revendication 1, dans lequel la tige de soupape est en plastique et la pièce de tige de soupape (54) est réalisée par moulage, en particulier par moulage thermoplastique par injection.

3. Procédé de fabrication d'une tige de soupape (10) selon la revendication 1, dans lequel la tige de soupape est en plastique et l'étape consistant à fournir une pièce de tige de soupape (54) comporte les étapes suivantes :
i) fournir une ébauche de tige de soupape ayant un ou plusieurs contours extérieurs de la tige de soupape par moulage, en particulier par moulage thermoplastique par injection ; et
ii) former le passage (55) et la sortie (57) par perçage.

4. Procédé de fabrication d'une tige de soupape (10) selon la revendication 1, dans lequel la tige de soupape est en métal et la pièce de tige de soupape (54) est réalisée par usinage et/ou par forgeage à froid.

5. Procédé de fabrication d'une tige de soupape (10) selon la revendication 1, dans lequel la tige de soupape est en métal et l'étape consistant à fournir la pièce de tige de soupape (54) comporte les étapes suivantes :
i) fournir une ébauche de tige de soupape ayant un ou plusieurs contours extérieurs de la tige de soupape par usinage et/ou par forgeage à froid ;
ii) former le passage (55) et la sortie (57) par perçage.

6. Procédé de fabrication d'une tige de soupape (10) selon la revendication 3 ou la revendication 5, dans lequel le passage (55) et la sortie (57) sont formés par perçage au laser.

7. Procédé de fabrication d'une tige de soupape (10) selon la revendication 1, dans lequel la tige de soupape est en métal et la pièce de tige de soupape (54) est réalisée par emboutissage profond.

8. Procédé de fabrication d'une tige de soupape (10) selon la revendication 7, dans lequel le procédé comprend en outre les étapes suivantes :
f) insérer dans le passage un bouchon (46), de telle sorte qu'une portion de l'intérieur du passage entre l'extrémité fermée (43) de la tige de soupape et l'orifice latéral (34) soit scellée ; et
g) courber l'extrémité de sortie (41) de la tige vers l'intérieur,
l'étape f) d'insertion du bouchon étant effectuée soit avant l'étape b) soit après l'étape e) et l'étape g) de courbure de l'extrémité de sortie étant effectuée soit avant l'étape b) soit après l'étape e), mais après avoir inséré le bouchon.

9. Tige de soupape (10) selon le procédé de l'une quelconque des revendications 1 à 8.

10. Soupape de dosage mesuré (5) pour distribuer des médicaments comprenant une tige de soupape selon la revendication 9.

11. Distributeur de doses mesurées de médicament (1) comprenant une tige de soupape selon la revendication 9.

12. Distributeur selon la revendication 11, dans lequel le distributeur est un inhalateur de doses mesurées.
